# EUROPEAN PATENT APPLICATION

(11) **EP 3 675 314 A1**
(43) Date of publication of application: **01.07.2020**
(21) Application number: 18897863.9
(22) Date of filing: 21.11.2018
(51) Int. Cl.: H02J 7/00, H02J 1/10

(54) **SMART BALANCING ENERGY CHARGING CONTROL SYSTEM**

(30) Priority: 16.10.2018 KR 20180123166
(71) Applicant: Enercamp Co., Ltd., Dalseo-gu, Daegu 42601 (KR)
(72) Inventor: CHOI, Jung Sub, Dalseo-gu Daegu 42601 (KR); PARK, Jun Nam, Dalseo-gu Daegu 42601 (KR)
(74) Representative: M. Zardi & Co S.A.
(86) International application number: PCT/KR2018/014342
(87) International publication number: WO 2020/080594

(57) **Abstract**

According to a smart balancing energy charge controlling system disclosed in the present invention, it is possible to enable efficient power supply control based on the smart balancing control by comparing the charging power of different power sources to control the charging electric current when charging the battery pack using the charging power applied from the different power sources, thereby enabling stable charging of the battery pack through the efficient power supply control of the different power sources.

## Description

### Technical Field

The present invention relates to a smart balancing energy charge controlling system and, more particularly, to a smart balancing energy charge controlling system that enables efficient power supply control based on smart balancing control by comparing charging power from different power sources to control a charging electric current when charging a battery pack using the charging power applied from the different power sources.

### Background Art

Generally, various kinds of electronic products of electric/electronic devices requiring a power source are used by connecting a commercial power source provided by an electric company (e.g., Korean Electric Power Corporation; KEPCO) to an outlet provided in a home or office. Also, in a place where a commercial power source is not provided, a power source may be provided by using a battery integrally or detachably mounted in the electronic device instead of the commercial power source.

On the other hand, in recent years, along with improvement of income level, as the five-day work week has become widespread, consumption patterns are gradually changing from simple forms of money consumption to the form of time consumption via traveling or leisure activities. Typically, as the population increasingly enjoys auto camping, the related industries are also growing.

There has been an increasing tendency to drive various electronic products using a battery in a situation where social interest in outdoors is increasing. In other words, as interest in outdoor activities increases, the population increasingly partakes in outdoor activities such as camping, fishing, and vacations. As outdoor culture such as camping changes into culture in a family unit, there is a growing tendency to use the various electronic products requiring a commercial power source. Since various electrical appliances including notebooks and smart phones are essential items for modern people, and camping users always like to carry and use them, it is necessary to supply electricity during camping. In most camping areas, since the power supply is not good, there are problems that the charging of a discharged smart phone or the use of a notebook computer is restricted and the use of various camping equipment requiring power is limited.

In order to solve such a problem, campers have used portable camping batteries for supplying power to such electric/electronic devices. However, there is a problem that the portable camping battery suffers from many difficulties in recharging when the battery is discharged. Such a portable camping battery is charged in a charging manner using a commercial power source provided at a camp site, or an individual charging manner using a small-sized photovoltaic power generator, there is a problem that there is a limitation in use in an outdoor place with many campers. Korean Utility Application Publication No. 20-2012-0000788 is disclosed in the document of related art.

### Disclosure

### Technical Problem

The present invention has been made keeping in mind the above problems occurring in the related art, and an object of the present invention is to provide a smart balancing energy charge controlling system that enables efficient power supply control based on smart balancing control by comparing charging power of different power sources to control a charging electric current when charging a battery pack using the charging power applied from the different power sources, thereby enabling stable charging of the battery pack through efficient power supply control of the different power sources.

In addition, the present invention has another object to provide a smart balancing energy charge controlling system that enables not only charging through simple power supply but also efficient supply control of multi-power by selectively controlling the power source according to the place characteristics of the outdoor activity or the weather, thereby enabling using and controlling efficient power supply and further enhancing the ease of use in outdoor activities such as auto camping, when charging the battery pack using the charging power applied from the different power sources.

### Technical Solution

In order to achieve the above object,
a smart balancing energy charge controlling system according to the present invention includes
a multi-power source input unit connected to respective different power sources to receive power for charging a battery pack from the respective different power sources;
a micro control unit performing smart balancing control by comparing charging power from the respective different power sources, in order to perform charging according to a rated power source of the battery pack using the charging power applied from the respective different power sources input through the multi-power source input unit; and
a battery pack charging connection unit connected to the battery pack to charge the battery pack with the charging power applied through the smart balancing control under a control of the micro control unit.

Preferably, the different power sources
may be configured to include a photovoltaic power source supplying photoelectrically converted DC power from a photovoltaic power generation module and an adapter power source converting commercial power into DC power and then supplying the DC power.

More preferably, the multi-power source input unit may include
a first power source input terminal receiving the photoelectrically converted DC power from the photovoltaic power generation module; and
a second power source input terminal receiving the DC power from the adapter converting the commercial power into the DC power and then supplying the DC power.

More preferably, when the micro control unit performs the smart balancing control by comparing the charging power from the different power sources,
the smart balancing control may be a charging current control of the different power sources.

More preferably, the micro control unit
may perform charging of the battery pack using power supply from any one of the different power sources or charging of the battery pack through the charging current control using multi-power supply from the different power sources.

More preferably, in the case that the rated power of the battery pack for charging is 12V/10Ah, when the weather is clear so that an amount of photovoltaic power generation is high,
the micro control unit may perform predetermined smart balancing control in such a manner to increase a current of the photovoltaic power source and lower a current of the commercial power source using a photovoltaic power supply of 12V/5Ah and an adapter power supply of 12V/5Ah, which are different power sources.

More preferably, in the case that the rated power source of the battery pack for charging is 12V/10Ah, when the weather is cloudy so that the power generation amount of the photovoltaic power source is low,
the micro control unit performs predetermined smart balancing control in such a manner to lower a current of the photovoltaic power source and increase a current of the commercial power source using a photovoltaic power supply of 12V/5Ah and an adapter power supply of 12V/5Ah, which are different power sources.

More preferably,
the battery pack may be an auxiliary battery device for outdoor camping which supplies DC power or AC power to an electric or electronic device used outdoors.

### Advantageous Effects

According to the smart balancing energy charge controlling system disclosed in the present invention, it is possible to enable efficient power supply control based on the smart balancing control by comparing the charging power of different power sources to control the charging electric current when charging the battery pack using the charging power applied from the different power sources, thereby enabling stable charging of the battery pack through the efficient power supply control of the different power sources.

In addition, according to the smart balancing energy charge controlling system disclosed in the present invention, it is possible to enable not only charging through simple power supply but also efficient supply control of multi-power by selectively controlling the power source according to the place characteristics of the outdoor activity or the weather, thereby enabling using and controlling efficient power supply and further enhancing the ease of use in outdoor activities such as auto camping, when charging a battery pack using the charging power applied from the different power sources.

### Description of Drawings

FIG. 1 is a diagram illustrating an overall system connection configuration for illustrating a concept of a smart balancing energy charge controlling system according to an embodiment of the present invention.
FIG. 2 illustrates a configuration of a smart balancing energy charge controlling system according to an embodiment of the present invention.
FIG. 3 is a functional block diagram illustrating a configuration of a smart balancing energy charge controlling system according to an embodiment of the present invention.
FIG. 4 is a functional block diagram illustrating a configuration of a multi-power input unit applied to a smart balancing energy charge controlling system according to an embodiment of the present invention.
FIG. 5 is a functional block diagram illustrating a configuration provided in a main body of a smart balancing energy charge controlling system according to an embodiment of the present invention.

### <Description of reference numerals >

10: power source
20: battery pack
100: smart balancing energy charge controlling system according to an embodiment of the present invention
101: main body
110: multi-power source input unit
111: first power source input terminal
112: second power source input terminal
113: spare power source input terminal
120: micro control unit
130: battery pack charging connection unit
140: charging state display unit
150: battery pack charge setting unit
160: power switch

### Mode for Invention

Hereinafter, preferred embodiments of the present invention will be described in detail with reference to the accompanying drawings so that those skilled in the art can easily carry out the present invention. In the following detailed description of the preferred embodiments of the present invention, a detailed description of known functions and configurations incorporated herein will be omitted when it may make the subject matter of the present invention rather unclear. In the drawings, like reference numerals are used throughout the drawings.

In addition, throughout the specification, when a part is referred to as being "connected" to another part, it may include not only a case in which they are "directly connected" but also a case in which they are "indirectly connected" in between. Also, when it is referred to as including an element, it means including other elements, rather than excluding other elements, unless specifically stated otherwise.

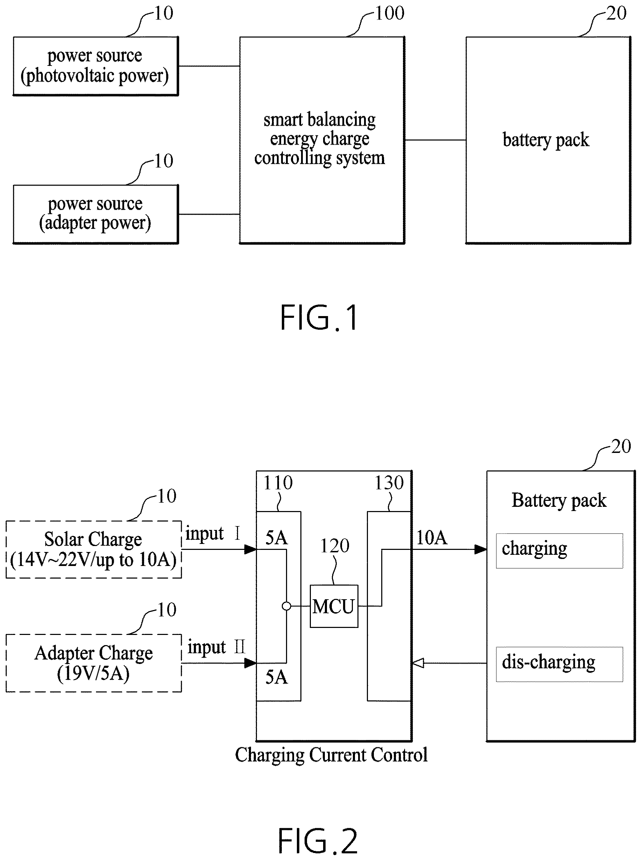

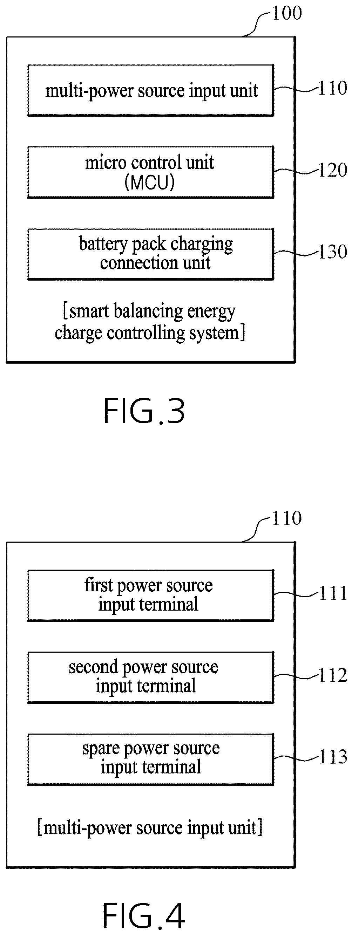

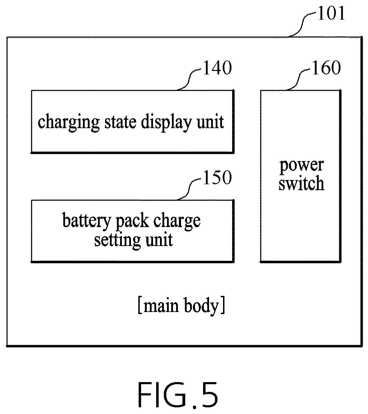

FIG. 1 is a diagram illustrating an overall system connection configuration for illustrating a concept of a smart balancing energy charge controlling system according to an embodiment of the present invention; FIG. 2 illustrates a configuration of a smart balancing energy charge controlling system according to an embodiment of the present invention; FIG. 3 is a functional block diagram illustrating a configuration of a smart balancing energy charge controlling system according to an embodiment of the present invention; FIG. 4 is a functional block diagram illustrating a configuration of a multi-power input unit applied to a smart balancing energy charge controlling system according to an embodiment of the present invention; and FIG. 5 is a functional block diagram illustrating a configuration provided in a main body of a smart balancing energy charge controlling system according to an embodiment of the present invention. As shown in FIGS. 1 to 5, a smart balancing energy charge controlling system 100 according to an embodiment of the present invention is configured to include a multi-power source input unit 110, a micro control unit 120, and a battery pack charging connection unit 130.

The multi-power source input unit 110 is configured to be connected to respective different power sources 10 and receive power for charging the battery pack 20 from the different power sources 10. As shown in FIG. 4, the multi-power source input unit 110 is configured to include a first power source input terminal 111 for receiving the photoelectrically converted DC power from the photovoltaic generation module and a second power source input terminal 112 for receiving the DC power from the adapter which converts a commercial power into DC power and then supplying the DC power. In addition, the multi-power source input unit 110 includes a spare power source input terminal 113, in addition to the first power source input terminal 111 for receiving photovoltaic power and the second power source input terminal 112 for receiving power from the adapter. In this case, the spare power source input terminal 113 may be used as a spare connection terminal when a connection failure occurs in the first and second power source input terminals 111 and 112.

The different power sources 10 includes a photovoltaic power source for supplying the photoelectrically converted DC power from the photovoltaic power generation module and an adapter power source which converts the commercial power (AC 110 V or AC 220 V) into DC power and supplies the DC power. Herein, in addition to the photovoltaic power generation module, the power source 10 using photovoltaic power includes a small-sized wind power generator or a small-sized self-generator, which is capable of being used outdoors. In addition, the battery pack 20 is an auxiliary battery device for outdoor camping which supplies DC power or AC power to an electric or electronic device used outdoors.

The micro control unit 120 is configured to perform smart balancing control by comparing the charging powers of the different power sources 10, in order to perform charging according to a rated power source of the battery pack 20 using the charging power applied from the different power sources 10 applied through the multi-power source input unit 110. The micro control unit 120 performs the smart balancing control by comparing the charging power of the different power sources 10, in which the smart balancing control refers to charging current control of the different power sources 10.

In addition, the micro control unit 120 may be configured to perform charging of the battery pack 20 using the power supply from any one of the different power sources 10, or charging of the battery pack 20 through current control by receiving the multi-power of the different power sources 10. That is, the micro control unit 120 enables not only charging using a simple power supply but also efficient power supply through multi power supply and current control.

In addition, in the case that the rated power source for charging the battery pack 20 is 12V/10Ah, when the weather is clear so that the amount of photovoltaic power generation is high, the micro control unit 120 performs a predetermined smart balancing control in such a manner to increase the current of the photovoltaic power source and lower the current of the commercial power source using photovoltaic power supply of 12V/5Ah and adapter power supply of 12V/5Ah, which are different power sources 10. More specifically, in the case that the photovoltaic power source and the commercial power source are used as the multi power source upon charging the battery pack 20 in an outdoor activity such as camping, when the weather is clear so that the power generation efficiency of the photovoltaic power source is high, it is possible to provide the smart balancing control to enable charging through the efficient power supply which reduces the use of the generated commercial power source and uses the photovoltaic power source.

On the other hand, in the case that the rated power source for charging the battery pack 20 is 12V/10Ah, when the weather is cloudy so that the power generation amount of the photovoltaic power source is low, the micro control unit 120 can perform a predetermined smart balancing control in such a manner to lower the current of the photovoltaic power source and increase the current of the commercial power source using photovoltaic power supply of 12V/5Ah and adapter power supply of 12V/5Ah, which are different power sources 10. Here, the rated power source of 12V/10Ah for charging the battery pack 20 is described as an example of the embodiment of the present invention, and it is not limited thereto, and it can be understood that various rated power sources are used.

The battery pack charging connection unit 130 is connected to the battery pack 20 in order to charge the battery pack 20 with the charging power applied through the smart balancing control under the control of the micro control unit 120.

In addition to the multi-power source input unit 110, the micro control unit 120, and the battery pack charging connection unit 130, the smart balancing energy charging control system 100 according to the present invention is configured to further include a charging state display unit 140, a battery pack charge setting unit 150, and the power switch 160 exposed on a main body 101 as shown in FIG. 5. Herein, the charging state display unit 140 may display the charging state, such as a charging voltage and a charging rate of the battery pack 20, and the battery pack charge setting unit 150 is configured to set the rated power source to charge the battery pack 20, and the power switch 160 may function as a power on/off switch of the smart balancing energy charge controlling system 100. In addition, the main body 101 is provided to have a plurality of holes (not shown) formed to reduce the heat generated during the rapid charging process, and configured as a housing having a handle (not shown) so that the convenience of carrying and use may be increased.

As described above, a smart balancing energy charge controlling system according to an embodiment of the present invention enables efficient power supply control based on the smart balancing control by comparing the charging power of different power sources to control the charging electric current when charging the battery pack using the charging power applied from the different power sources, thereby enabling stable charging of the battery pack through the efficient power supply control of the different power sources. Particularly, according to the smart balancing energy charge controlling system, it is possible to enable not only charging through simple power supply but also efficient supply control of multi-power by selectively controlling the power source according to the place characteristics of the outdoor activity or the weather, thereby enabling using and controlling efficient power supply and further enhancing the ease of use in outdoor activities such as auto camping, when charging the battery pack using the charging power applied from the different power sources.

While the present invention has been particularly shown and described with reference to exemplary embodiments thereof, it is to be understood that the invention is not limited to the disclosed embodiments, but, on the contrary, will be.

## Claims

1. A smart balancing energy charge controlling system (100), comprising:
a multi-power source input unit (110) connected to respective different power sources (10) to receive power for charging a battery pack (20) from the respective different power sources (10);
a micro control unit (120) performing smart balancing control by comparing charging power from the respective different power sources (10), in order to perform charging according to a rated power source of the battery pack (20) using the charging power applied from the respective different power sources (10) input through the multi-power source input unit (110); and
a battery pack charging connection unit (130) connected to the battery pack (20) to charge the battery pack (20) with the charging power applied through the smart balancing control under a control of the micro control unit (120).

2. The system of claim 1, wherein the different power sources (10) is configured to include a photovoltaic power source supplying photoelectrically converted DC power from a photovoltaic power generation module and an adapter power source converting commercial power into DC power and then supplying the DC power.

3. The system of claim 2, wherein the multi-power source input unit (110) includes:
a first power source input terminal (111) receiving the photoelectrically converted DC power from the photovoltaic power generation module; and
a second power source input terminal (112) receiving the DC power from the adapter converting the commercial power into the DC power and then supplying the DC power.

4. The system of any one of claims 1 to 3, wherein when the micro control unit (120) performs the smart balancing control by comparing the charging power from the different power sources (10), the smart balancing control is a charging current control of the different power sources (10) .

5. The system of claim 4, wherein the micro control unit (120) performs charging of the battery pack (20) using power supply from any one of the different power sources (10) or charging of the battery pack (20) through the charging current control using multi-power supply from the different power sources (10).

6. The system of claim 4, wherein in the case that the rated power of the battery pack (20) for charging is 12V/10Ah, when the weather is clear so that an amount of photovoltaic power generation is high, the micro control unit (120) performs predetermined smart balancing control in such a manner to increase a current of the photovoltaic power source and lower a current of the commercial power source using a photovoltaic power supply of 12V/5Ah and an adapter power supply of 12V/5Ah, which are different power sources (10).

7. The system of claim 4, wherein in the case that the rated power source of the battery pack (20) for charging is 12V/10Ah, when the weather is cloudy so that the power generation amount of the photovoltaic power source is low, the micro control unit (120) performs predetermined smart balancing control in such a manner to lower a current of the photovoltaic power source and increase a current of the commercial power source using a photovoltaic power supply of 12V/5Ah and an adapter power supply of 12V/5Ah, which are different power sources (10).

8. The system of claim 4, wherein the battery pack (20) is an auxiliary battery device for outdoor camping which supplies DC power or AC power to an electric or electronic device used outdoors.
